# NEUE EUROPÄISCHE PATENTSCHRIFT

(11) **EP 3 897 196 B2**
(45) Veröffentlichungstag und Bekanntmachung des Hinweises auf die Entscheidung über den Einspruch: **10.06.2026**
(45) Hinweis auf die Patenterteilung: 01.11.2023
(21) Anmeldenummer: 19827643.8
(22) Anmeldetag: 10.12.2019
(51) Int. Cl.: A23L 7/161, C08L 3/02

(54) **EINSATZ VON EXPANDIERTEM UND HYDROPHOBEM POPCORN ZUR HERSTELLUNG VON DREIDIMENSIONALEN FORMTEILEN**
USE OF EXPANDED AND HYDROPHOBIC POPCORN TO PRODUCE THREE-DIMENSIONAL SHAPED PARTS
UTILISATION DE POPCORN EXPANSÉ ET HYDROPHOBE POUR LA FABRICATION DE PIÈCES MOULÉES TRIDIMENSIONNELLES

(30) Priorität: 18.12.2018 DE 102018132738
(43) Veröffentlichungstag der Anmeldung: 27.10.2021
(73) Patentinhaber: Georg-August-Universität Göttingen, 37073 Göttingen (DE)
(72) Erfinder: EURING, Markus, 37077 Göttingen (DE); KHARAZIPOUR, Alireza, 37079 Göttingen (DE)
(74) Vertreter: Michalski Hüttermann & Partner mbB
(86) Internationale Anmeldenummer: PCT/EP2019/084402
(87) Internationale Veröffentlichungsnummer: WO 2020/126665

(56) Entgegenhaltungen:
- WO-A1-2012/066111
- WO-A1-2012/066111
- WO-A2-2005/118275
- DE-A1- 102006 047 279
- DE-A1- 102006 047 279
- DE-A1- 19 806 951
- DE-A1- 19 806 951
- US-A- 3 511 899
- US-A- 3 511 899
- US-A- 3 630 821
- US-A- 3 630 821
- US-A- 5 300 333
- US-A- 5 300 333
- Duden_umgeben-umhüllen
- Römpp_Hydroxycarbonsäuren
- Römpp_Polyolefinwachse

## Beschreibung

Die vorliegende Erfindung bezieht sich auf das Gebiet der Formteile, wie sie z.B. für Verpackungen, in der Automobilindustrie (Interieur und Exterieur), als Schallabsorber, für die Wärmedämmung oder in der Konsumgüterindustrie verwendet werden. Derartige Formteile sollten leicht herstellbar und ebenso leichtgewichtig sein, und vorzugsweise ganz oder teilweise aus nachwachsenden Rohstoffen bestehen.

Derartige Formteile werden bisher hauptsächlich aus Polypropylen, Polyethylen, Polyvinylchlorid und Polystyrol hergestellt. Diese Formteile aus vier Kunststofffamilien haben neben positiven Eigenschaften, wie eine niedrige Dichte, hydrophobe Oberfläche, eine gute Verarbeitbarkeit und niedrige Wärmeleitfähigkeit auch zahlreiche negative Charakteristiken.

Negativ ist, dass das Material oftmals sehr spröde ist und nur eine sehr geringe chemische Beständigkeit und Erweichungstemperatur besitzt. Des Weiteren zeigten die Produkte aus diese Kunststoffen oftmals eine sehr niedrige Schmelztemperatur, die dazu führt, dass der Kunststoff bereits bei Temperaturen wenig über 100 °C schmilzt und brennend abtropft. Diese Tropfen können Feuer fangen und zur Brandausbreitung beitragen. Durch den Einsatz von passenden, jedoch oft sehr giftigen Flammschutzmitteln kann die Brennbarkeit reduziert werden. Bislang werden oftmals bromierte und äußerst umwelt- und gesundheitsschädliche Additive (polybromierte Diphenylether oder Hexabromcyclododecan) verwendet.

Im Weiteren werden diese Kunststoffe zumeist aus endlichen fossilen Rohstoffen hergestellt, die teilweise schwer wiederverwendbar sind. Die Zunahme von Plastikmüll auf dem Land und insbesondere in den Weltmeeren wird zu einem immer größeren ökologischen Problem mit globaler Bedeutung. Bei der Verbrennung wird Kohlenstoffdioxid freigesetzt, Kunststoffpartikel gelangen in die Nahrungskette und durch die Zersetzung werden Schadstoffe frei. Organisationen wie EU und UN weisen darauf hin, dass bei einem weiteren Wirtschaftswachstum und gleichbleibenden Konsumverhalten die Umweltprobleme im Zusammenhang mit Kunststoff weiter zunehmen werden. Aufgrund dieser gesundheitlichen und ökologischen Probleme, die im Allgemeinen bekannt sind, ist in jüngster Zeit der Ruf nach Alternativen immer lauter geworden.

Formteile aufweisend Popcorn sind unter anderem bekannt aus DE 10 2006 047279 A1, US 3 511 899 A, US 3 630 821 A und US 5 300 333 A.

Es stellt sich somit die Aufgabe alternative Formteile sowie Verfahren zu deren Herstellung zur Verfügung zu stellen.

Diese Aufgabe wird durch ein Formteil gemäß Anspruch 1 gelöst. Demgemäß wird ein Formteil vorgeschlagen, enthaltend Popcorn, welches im Wesentlichen von Polymer umgeben ist sowie weiteres Bindemittel, wobei der summierte Anteil an Polymer und Bindemittel ≤ 20 % (Gew./Gew.) bezogen auf das Formteil beträgt, wobei das Polymer ein hydrophobes Polymer ist.

"Im Wesentlichen" im Sinne der vorliegenden Erfindung bedeutet einen Anteil von ≥ 95 % (Gewicht), bevorzugt ≥ 97 %, noch bevorzugt ≥ 99 %. Gemäß der vorliegenden Erfindung ist somit das allermeiste Popcorn von Polymer umgeben.

Überraschenderweise hat sich herausgestellt, dass so bei vielen Anwendungen der Erfindung eine Vielzahl von Formteilen mit guten bis exzellenten Eigenschaften (u. a. geringe Wärmeleitfähigkeit, ausgezeichnete Dimensionstabilität, hervorragende Sachallabsorptionseigenschaften und Schwerentflammbarkeit) herstellbar ist, die somit zum überwiegenden Teil aus nachwachsenden Rohstoffen, nämlich dem Popcorn besteht.

Gemäß der Erfindung umfasst das Formteil sowohl Polymer wie Bindemittel.

Gemäß einer bevorzugten Ausführungsform umfasst das Formteil im Wesentlichen Popcorn, Polymer und Bindemittel, bzw. besteht im Wesentlichen daraus.

Der Term "Popcorn" im Sinne der vorliegenden Erfindung umfasst insbesondere alle Materialien, welche wie der Puffmais (*Zea mays, convar. Microsperma*) - gegebenenfalls nach entsprechender Einfettung bei einer schnellen Erwärmung zu hohen Temperaturen explodieren, indem das in dem Samen vorhandene Wasser schlagartig verdampft und so die im Samen enthaltene Stärke in eine schaumartige Konsistenz überführt. Ein solches Verhalten ist unter anderem von Quinoa-Korn, Amarant, Reis oder auch Weizen bekannt, Materialien, die auf diesen Grundstoffen basieren, werden im Sinne der vorliegenden Erfindung explizit auch als "Popcorn" bezeichnet und umfasst, die Bezeichnung "Popcorn" soll nicht nur auf Mais beschränkt sein und wurde insbesondere aus Gründen der Einfachheit, Übersichtlichkeit und Lesbarkeit gewählt.

Bevorzugt beträgt der summierte Anteil an Polymer und Bindemittel ≤ 15% (Gew./Gew.) bezogen auf das Formteil, noch bevorzugt ≤ 10% (Gew./Gew.). Ein geringerer Anteil an Polymer und Bindemittel (wo vorhanden) ist vorteilhaft, da so das Formteil leichter und der Anteil an nachwachsenden Rohstoffen (= Popcorn) erhöht wird.

Gemäß einer bevorzugten Ausführungsform wird im Formteil das Popcorn als Ganzes benutzt, d. h. es werden ganze Körner und/oder Samen expandiert und das Popcorn danach nicht gehäckselt (geschrotet) oder zerkleinert verwendet.

Gemäß einer alternativen und ebenso bevorzugten Ausführungsform wird Popcorn benutzt, welches aus zuvor zerkleinerten Ausgangsmaterialien (z. B. Maisschrot) hergestellt wurde. Gegebenenfalls kann das expandierte Granulat vor der Verarbeitung zu Formteilen noch zerkleinert werden.

Natürlich sind auch Ausführungsformen vorteilhaft, in denen im Formteil sowohl vollständiges wie gemäß dem vorigen Absatz behandeltes Popcorn verwendet wird.

Gemäß der Erfindung beträgt der Fettanteil des Popcorns vor der Verarbeitung ≤ 10 (Gew-) %.

Unter "Fettanteil" des Popcorns wird dabei nicht der Gesamtanteil an Fett im Popcorn verstanden, sondern der Anteil an Fett, welcher zur Hydrophobierung der Samenepidermis eingesetzt wurde, die zum besseren Einschluss des im Samen enthaltenen Wassers führt.

Es hat sich bei vielen Anwendungen innerhalb der vorliegenden Erfindung als günstig herausgestellt, diesen Fettanteil so gering wie möglich zu halten, da dies die weitere Verarbeitung des Popcorns erleichtert. Vorzugsweise beträgt der Fettanteil ≤ 5 (Gew-) %, nach einer besonders bevorzugten Ausführungsform wird zur Konsistenzänderung (Umwandlung) (="Puffung") kein Fett zugesetzt.

Das für die Herstellung der dreidimensionalen Formteile benutzte Popcorn wird nach der Aufpuffung mit einem Polymer überzogen (Coating). Mit "überzogen" ist dabei gemeint, dass die einzelnen Popcornteilchen von dem Polymer, dass aus synthetischen und/oder biologischen Bestandteilen zusammengesetzt ist, umgeben und/oder umhüllt sind. Bevorzugt findet dabei jedoch keine oder nur wenig allgemeine Verklebung statt, so dass z. B. das Popcorn nach der Umhüllung und vor der weiteren Verarbeitung als solches als Granulat vorliegt, d. h. schüttfähig ist.

Das Polymer, welches das Popcorn umgibt, ist ein hydrophobes Polymer. Polymere sind gemäß der Erfindung ausgewählt aus der Gruppe bestehend aus Polypropylen, Polyethylen, Polyvinylchlorid, Polystyrol, Polyacrylat Polymilchsäuren (PLA), Polyhydroxysäuren wie z. B. Polyhydroxybuttersäure und Cellulosederivate. Das Polymer kann auch aus einer beliebigen Mischung daraus bestehen.

Bevorzugt beträgt dabei der Anteil von Polymer im Formteil (in Gew-% bezogen auf das Gewicht des Formteils) ≤ 5%, bevorzugt ≤ 3%.

Gemäß der Erfindung umfasst das Formteil ein weiteres Bindemittel. Bindemittel gemäß der Erfindung sind ausgewählt aus Harnstoff-Formaldehyd-Harz, Melamin-Formaldehyd-Harz, Melaminverstärktes-Harnstoff-Formaldehyd-Harz, Tannin-Formaldehyd-Harz, Phenol-Formaldehyd-Harz, polymeres Diphenyl-Methan-Di-Isocyanat oder Mischungen daraus.

Bevorzugt beträgt dabei der Anteil von Bindemittel im Formteil (in Gew-% bezogen auf das Gewicht des Formteils) ≤ 10 %, bevorzugt ≤ 5 %.

Bevorzugt beträgt das Verhältnis von Bindemittel zu Polymer (in Gew/Gew/ von ≥1:1 bis ≤10:1. Dies hat sich für viele Anwendungen innerhalb der vorliegenden Erfindung als vorteilhaft herausgestellt. Bevorzugt beträgt das Verhältnis von Bindemittel zu Polymer (in Gew/Gew/ von ≥1,5:1 bis ≤5:1

Die vorliegende Aufgabe wird außerdem durch ein Verfahren gemäß Anspruch 6 gelöst. Demgemäß wird ein Verfahren zur Herstellung von vorbeschriebenen Formteilen vorgeschlagen, umfassend die Schritte:
a) Herstellen von Popcorn
b) Hydrophobierung des in Schritt a) hergestellten Popcorns mittels eines Polymers, wobei das Polymer ein hydrophobes Polymer ist
c) Optionale Nachbehandlung
d) Zugabe von Bindemittel
e) Herstellung des Formteils
f) Optionale Beschichtung der Formteiloberfläche
g) Optionale Kaschierung
wobei der summierte Anteil an Polymer und Bindemittel ≤ 20% (Gew./Gew.) bezogen auf das Formteil beträgt.

Dieses Verfahren bezieht sich bevorzugt auf Formteile wie oben dargestellt, d. h. bevorzugt handelt es sich bei dem Verfahren um ein Verfahren zum Herstellen der oben beschriebenen Formteile.

Die einzelnen Schritte des Verfahrens werden im Folgenden näher erläutert, wobei beliebige Teilschritte mit anderen beliebig kombinierbar sind.

### a) Herstellen von Popcorn

Maiskörner können mit unterschiedlichen Methoden zum Expandieren gebracht werden.

Gemäß einer bevorzugten Ausführungsform der Erfindung wird das für die Herstellung der Formteile benutzte Popcorn wird durch Puffung hergestellt. Dabei können je nach Anwendung unveränderte Körner verwendet werden oder es werden geeignete Samen, z. B. Futtermaiskörner zunächst geschrotet und die Kornbruchstücke anschließend unter Druck- und Temperatureinwirkung nach dem Bichselverfahren (WO 1999042005A1) einem definierten Prozess expandiert. Weitere Verfahren zur Puffung der stärkehaltigen Körner sind bspw. Heizplatten, Heißluftmaschinen und Mikrowellen.

Eine bevorzugte Ausführungsform der Erfindung verwendet das sogenannte Cerex-Verfahren der Cerex AG, CH-3368 Bleienbach. Das Verfahren lässt sich in drei Abschnitte unterteilen: Vorheizelement, Reaktor sowie Expansionskammer. Zuerst wird das Getreideschrot im Vorheizelement gleichmäßig auf ca. 100 °C erwärmt, anschließend wird das Getreide im Reaktor mit Heißdampf behandelt und am Ende des Prozesses wird das Getreide in eine Expansionskammer geleitet. Hier werden die Maiskörner (Maisschrot) in einer bestimmten Zeitspanne durch Druckreduzierung zum Expandieren gebracht. Am Ende werden die aufgepufften Materialien gesammelt und von den nicht gepufften Bestandteilen getrennt (Bichsel, o. J.). Die Umwandlung von Maisschrot zu Popcorngranulat nach dem Cerex-Verfahren erfolgt bei den meisten Anwendungen fast zu 100 %, lediglich weniger als 5 % des Schrots werden nicht aufgepufft.

Weiterhin kann vor Schritt b) das Popcorn nochmals zerkleinert werden, so dass gemäß einer bevorzugten Ausführungsform der Erfindung das Verfahren einen Schritt a1) umfasst, der zwischen Schritt a) und b) durchgeführt wird: a1) Zerkleinern des gepufften Popcorns

Schritt a1) kann dabei mit allen gängigen Herstellungstechniken vorgenommen werden.

In Schritt b) wird das Popcorn hydrophobiert, so dass es am Ende im Wesentlichen von Polymer umgeben ist. Dies kann bevorzugt dadurch geschehen, dass das Popcorn gemischt und dabei mit dem Polymer bzw. einer das Polymer enthaltenen Lösung besprüht wird.

### b) Hydrophobierung mittels Polymer

Nach der Hydrophobierung bzw. dem Coatingprozess entsteht bevorzugt ein förderfähiges (z. B. pneumatisch), schüttfähiges hydrophobes Popcorngranulat. Gemäß einer bevorzugten Ausführungsform der Erfindung wird das Polymer so gewählt, dass nach Hydrophobierung die Möglichkeit besteht, die überzogenen Popcorngranulate zu vernetzen

### c) Optionale Nachbehandlung

Gemäß einer bevorzugten Ausführungsform der Erfindung folgt auf Schritt b) eine Nachbehandlung des entstandenen hydrophobierten Popcorns. Bevorzugt wird auf eine Temperatur von ≥ 60 °C bis ≤150°C erhitzt.

Dies hat sich bei vielen Anwendungen als vorteilhaft herausgestellt, da so die hydrophoben Eigenschaften des entstandenen Popcorngranulats nochmals verbessert werden können.

### d) Zugabe von Bindemittel

Es wird noch ein weiteres Bindemittel zugegeben. Bindemittel gemäß der Erfindung sind ausgewählt aus Harnstoff-Formaldehyd-Harz, Melamin-Formaldehyd-Harz, Melaminverstärktes-Harnstoff-Formaldehyd-Harz, Tannin-Formaldehyd-Harz, Phenol-Formaldehyd-Harz, polymeres Diphenyl-Methan-Di-Isocyanat oder Mischungen daraus.

Bevorzugt beträgt dabei der Anteil von Bindemittel im Formteil (in Gew-% bezogen auf das Gewicht des Formteils) ≤ 10 %, bevorzugt ≤ 5 %.

Der Bindemittelauftrag kann nach beliebigen konventionellen Mischer- oder Strömungsverfahren aufgetragen werden, z. B. durch Besprühen des Granulats in diversen Mischaggregaten.

### e) Herstellung des Formteils

Das Formteil wird bevorzugt aus dem Popcorngranulat unter leicht erhöhtem Druck und/oder Temperatur hergestellt.

Bevorzugte Drücke sind dabei ≥ 0,1 bar und ≤ 10 bar, bevorzugt ≤ 5 bar, sowie am meisten bevorzugt ≤ 2 bar. Bevorzugte Presszeiten sind dabei ≥ 0,5 s/mm Formteil und ≤ 24 s/mm Formteil Minute, bevorzugt ≤ 8 s/mm Formteil.

Gemäß einer alternativen und ebenso bevorzugten Ausführungsform wird das Formteil unter Verwendung von Dampfaushärtung oder Trockendampf hergestellt. Dabei wird bevorzugt eine Temperatur von ≥ 50 °C und ≤ 330 °C, noch bevorzugt ≥ 80 °C und ≤ 140 °C verwendet.

Besonders bevorzugt ist Trockendampf, wobei bevorzugt der Trockendampf mittels eines Abscheiders aus Nassdampf hergestellt wird. Bevorzugt beträgt die Temperatur des Trockendampfes zwischen ≥ 120 °C und ≤ 220 °C, noch bevorzugt ≥ 160°C und ≤ 290 °C.

Zur Herstellung des Formteils als solchem werden bevorzugt zwei Techniken benutzt:

### a) Formpressen

Dieses Verfahren ist besonders bevorzugt für leicht gewölbte oder flache Bauteile. Haupteinsatzgebiet dieses Verfahrens ist üblicherweise die Automobilindustrie, Verpackungsindustrie wo es zur Produktion größerer Bauteile mit zweidimensionaler oder dreidimensionaler Struktur kommt.

Zu Beginn des Verfahrens wird die Formmasse, d. h. das von Polymer umgebene Popcorn mit weiterem Bindemittel in eine Kavität eingebracht und unter Einsatz eines Druckkolbens geschlossen. Durch den Druck erlangt die Formmasse die vom Werkzeug vorgegebene Form. Die in der Kavität vorhandenen Formmasse wird unter Druck und konduktiver Wärmeübertragung durch elektrische Erhitzung der Kavität oder durch Dampf (ggf Trockendampf) aufgeheizt. Bei Verwendung von Thermoplasten dient die Temperatur meist zum Schmelzen des Kunststoffs. Danach kann das fertige Teil aus dem Formwerkzeug entnommen und ggf. nach- oder weiterverarbeitet bzw. beschichtet oder kaschiert (z. B. Folien auf Stärkebasis oder PU-Folien) werden.

### a) Verwendung von Formteilautomaten

Bei dieser Technik werden meist Spezial-Formteilautomaten benutzt, welche höhere Drücke und/oder Temperaturen ermöglichen. Dabei besteht der erste Prozessschritt im pneumatische Komprimieren der Formmasse (d.h. das von Polymer umgebene Popcorn mit weiterem Bindemittel) und das Befüllen des geschlossenen Spezial-Formteilautomaten mit der komprimierten Formmasse. Alternativ kann auch die Formmasse durch ein Vakuum in die Kavität gefördert werden. Mit Hilfe von Temperatur und Druck wird die Formmasse zum Beispiel mittels Dampf (ggf. Trockendampf) auf die gewünschte Aushärtetemperatur gebracht und dadurch, je nach Anwendung, das Polymer vollständig miteinander vernetzt. Dabei können die o. g. Medien durch die Formmasse einseitig, wechselseitig oder von allen Seiten durchströmt werden. Nachdem die die Popcornpartikel miteinander vernetzt bzw. verschmolzen werden, wird in dem letzten Prozessschritt das Formteil aus dem Werkzeugteil entnommen. Danach können die Formteile beschichtet oder kaschiert (z. B. Folien auf Stärkebasis, PU-Folien oder PLA- Folien, Beflockung) werden.

Je nach Anwendung kann die Formteiloberfläche noch beschichtet werden, z. B. in dem Farben, beispielsweise mittels Lackierung aufgebracht werden. Die Formteiloberfläche kann aber auch beflockt werden, je nach Anwendung kann es auch vorteilhaft sein, wenn eine weitere Imprägnierungsschicht aufgebracht wird.

### g) Optionale Kaschierung

Je nach Anwendung kann aber auch alternativ oder zusätzlich eine Kaschierung erfolgen. Dabei können die gängigen Kaschierungsmittel wie Lack, Leim oder Wachs zum Einsatz kommen.

Die erfindungsgemäßen Formteile und/oder die gemäß dem erfindungsgemäßen Verfahren hergestellten Formteile können bei einer Vielzahl von Anwendungen eingesetzt werden, darunter (aber nicht darauf beschränkt): Verpackungsmaterialien (z. B. Kühlboxen, Schutzverpackung für Elektrogeräte, Gewürzdosen etc.), Automobilteile (z. B. Kopfstützen, Sonnenblenden, Kindersitzschalen, Dämmmatten für Türinnenverkleidungen und Wohnmobil-Kabinenverkleidungen), Dämmmaterialien (z. B. Elektrogeräte), Geschirr, Sportartikel (z. B. Yoga-Rollen, Nackenrollen), Spielzeug (z. B. Würfel, Bretter für Gesellschaftsspiele, Puzzle), Bilderrahmen, Präsentkörbe, Akustische Verbund-Formteile, Wohnmobilteile etc.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in denen - beispielhaft - mehrere Ausführungsbeispiele des erfindungsgemäßen Verfahrens dargestellt sind. In den Zeichnungen zeigt:
- Fig. 1: bis Fig. 3 schematisch den Ablauf eines Herstellungsverfahrens eines erfindungsgemäßen Formteils gemäß einer ersten Ausführungsform; sowie
- Fig. 4: schematisch den Ablauf eines Herstellungsverfahrens eines erfindungsgemäßen Formteils gemäß einer zweiten Ausführungsform.

### f) Optionale Beschichtung der Formteiloberfläche

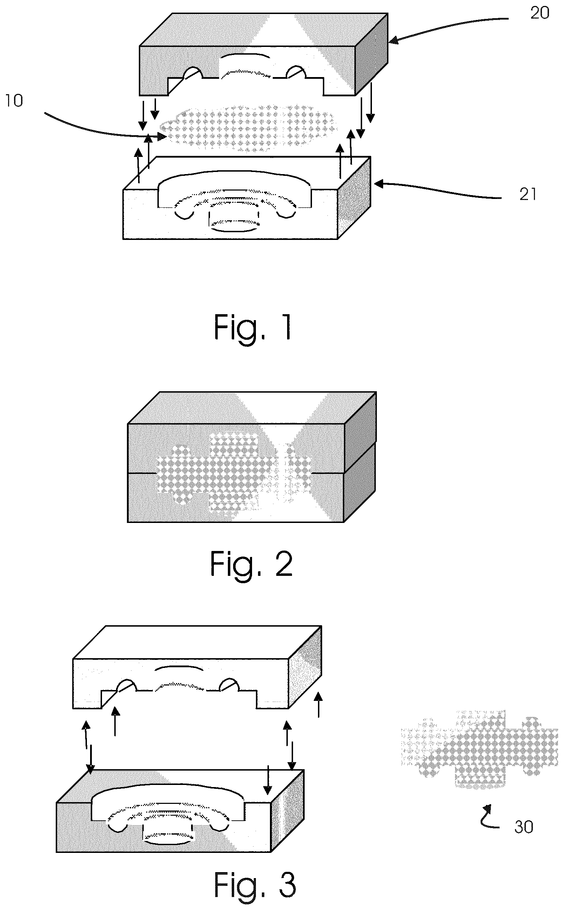

Figuren 1 bis 3 zeigen schematisch den Ablauf eines Herstellungsverfahrens eines erfindungsgemäßen Formteils gemäß einer ersten Ausführungsform. In dieser wird in Schritt 1, in Figur 1 dargestellt, eine Formmasse 10, bestehend aus von Polymer umgebene Popcorn mit weiterem Bindemittel in eine Kavität eingebracht, die durch zwei entsprechende Formkörper 20 und 21 gebildet wird. In Schritt 2, in Fig. 2 dargestellt, wird aufgeheizt, so dass sich unter Temperatureinfluss (und unter dem Einfluss der Temperatur gebildetem Druck) das Formteil 30 bildet, welches dann in Schritt 3, in Fig. 3. dargestellt, entnommen wird.

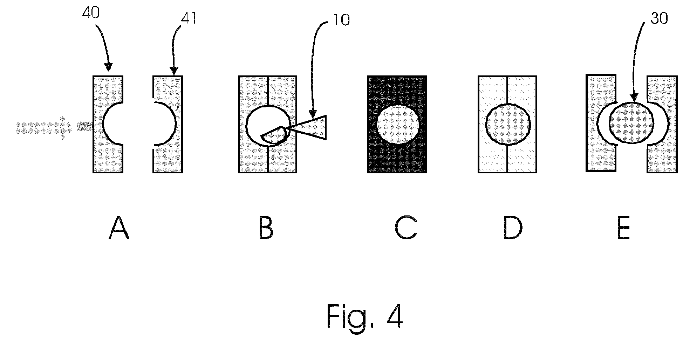

Fig. 4 zeigt schematisch den Ablauf eines Herstellungsverfahrens eines erfindungsgemäßen Formteils gemäß einer zweiten Ausführungsform mittels eines Formteilautomaten. Hier wird zunächst die Kavität, die durch die beiden Formkörper 40 und 41 gebildet wird, geschlossen (Schritt A), anschließend die Formmasse 10 unter Druck eingefüllt (Schritt B).

Nach Erhitzen unter Druck (Schritt C) und Abkühlen (Schritt D) kann dann das entstandene Formteil 30 entnommen werden.

Die Erfindung wird außerdem anhand von Beispielen erläutert, die rein illustrativ und als nicht beschränkend anzusehen sind.

Die auf die oben beschriebene Weise hergestellten Formteile mit unterschiedliche Dichte wurden hinsichtlich ihrer Festigkeitseigenschaften untersucht. Die Ergebnisse sind in Tabelle 1 zusammengestellt.

**Tabelle 1: Mechanisch-technologische Eigenschaften von mit einer Polymerschicht aus Polypropylen (PP) oder Polyethylen (PE) umgebenen Popcomformteilen in Abhängigkeit von der Rohdichte**

| **Polymer** | **Dichte [Kg/m³]** | **Biegef. [N/mm²]** | **QZ [kPa]** | **Druckspannung [kPa]** | **Wärmeleitf. [W/(m*K]** |
|---|---|---|---|---|---|
| PP | 100 | 2,2 | 140 | 280-310 | 0,040 |
| PE | | 1,8 | 180 | 295-320 | |
| PP | 120 | 2,8 | 170 | 335 | 0,041 |
| PE | | 2,3 | 210 | 355 | |
| PP | 140 | 3,8 | 160 | 350 | 0,042 |
| PE | | 2,5 | 230 | 372 | |
| PP | 160 | 4,4 | 175 | 380 | 0,044 |
| PE | | 2,7 | 255 | 388 | |
| PP | 180 | 4,9 | 230 | 410 | 0,045 |
| PE | | 2,9 | 290 | 400 | |
| PP | 200 | 5,6 | 295 | 480 | 0,048 |
| PE | | 3,1 | 330 | 420 | |

Zur Herstellung von flexiblen Formteilen aus Popcorngranulat wurden ein Polymer auf der Basis von Polypropylen und ein Melamin-Hamstoff-Formaldehyd-Harz (MUF) verwendet. In der ersten Stufe wurde das Polypropylen 2 % atro (bezogen auf das Popcorn) in einem Mischer auf das Popcorn besprüht. Danach wurde das Material bei ca. 105 °C getrocknet. In zweiten Prozessschritt wurde das Material in einem Mischaggregat gefördert und mit einem MUF (66% Feststoffanteil) in der Dosierung 5 % atro auf Popcorn mit Polymer beleimt und das Material als Formmasse in die Kavität eingebracht, welche unter Druck und konduktive Wärmeübertragung aufgeheizt wird. Anschließend wird die Kavität unter Einsatz eines Druckkolbens geschlossen. Durch den Druck erlangt die Formmasse die vom Werkzeug vorgegebene Form. Im letzten Prozessschritt wird das fertige, flexible Formteil aus dem Werkzeugteil entnommen. In Tab. 2 sind die mechanisch-technologischen Eigenschaften dieser flexiblen Formteile aufgeführt.

**Tabelle 2: Mechanisch-technologische Eigenschaften von mit einer Polymerschicht aus Polypropylen (PP) oder Polyethylen (PE) umgebenen und MUF beleimten Popcomformteilen in Abhängigkeit von der Rohdichte**

| **Polymer atro Popcorn** | **Dichte [Kg/m³]** | **Biegef. [N/mm²]** | **QZ [kPa]** | **Druckspannung [kPa]** |
|---|---|---|---|---|
| PP 2 % | 140 | 4,3 | 300 | 130-180 |
| MUF 5% | | | | |
| PE 2 % | 160 | 4,9 | 380 | 170-220 |
| MUF 5% | | | | |
| PP 2 % | 140 | 6,0 | 350 | 150-170 |
| MUF 5 % | | | | |
| PP 2 % | 160 | 6,8 | 420 | 180-230 |
| MUF 5 % | | | | |

Zur Herstellung von Formteilen aus Popcorngranulat mittels Trockendampf wurde das Popcorngranulat mit einem Polymer (Polyethylen) und Harnstoff-Formaldehyd-Harz (UF, BASF Kaurit 350) vorbehandelt.

Zunächst wurden 1,5 % Polyethylen auf das Popcorngranulat aufgetragen. Anschließend wurde das so behandelte Popcorngranulat mit dem 66 %igen Harnstoff-Formaldehyd-Harz im Beleimungsaggregat versehen. In zweiten Schritt wurde das beleimte Material durch einen Unterdruck (Vakuum) von 2,5 bar in die Kavität befördert und mittels Trockendampf ausgehärtet.

Für die Erzeugung des Trockendampfes wurde Nassdampf durch einen Abscheider geströmt, der ca. 98% des ursprünglichen Nassdampfes eliminiert und in ca. 99 % Trockendampf umwandelt. Die Temperatur des hier verwendete Trockendampfes betrug > 100 °C.

Je nach Dicke und Rohdichte des Formteils wurden unterschiedliche Mengen Trockendampf durch das Formteil bis zu 90 Sekunden durchgeströmt. Anschließend wurde das fertige Formteil aus der Kavität entnommen. In Tab. 3 sind die mechanisch-technologischen Eigenschaften der mittels Trockendampf hergestellten Formteile aufgeführt.

**Tabelle 3: Mechanisch-technologische Eigenschaften von UF-Harz gebundenen Formteilen mit unterschiedlichen Dichten und Dicken nach der Vernetzung mittels heißem Trockendampf von ca. 150 °C**

| **Polymer atro Popcorn** | **Dichte [kg/m³]** | **Dicke [mm]** | **QZ [kPa]** |
|---|---|---|---|
| PE 1,5 % | 150 | 20 | 310 |
| UF 7 % | | 50 | 295 |
| PE 1,5 % | 120 | 20 | 275 |
| UF 7 % | | 50 | 255 |
| PE 1,5 % | 80 | 20 | 243 |
| UF 7 % | | 50 | 217 |

Die einzelnen Kombinationen der Bestandteile und der Merkmale von den bereits erwähnten Ausführungen sind exemplarisch; der Austausch und die Substitution dieser Lehren mit anderen Lehren, die in dieser Druckschrift enthalten sind mit den zitierten Druckschriften werden ebenfalls ausdrücklich erwogen. Der Fachmann erkennt, dass Variationen, Modifikationen und andere Ausführungen, die hier beschrieben werden, ebenfalls auftreten können ohne von dem Erfindungsgedanken und dem Umfang der Erfindung abzuweichen. Entsprechend ist die obengenannte Beschreibung beispielhaft und nicht als beschränkend anzusehen. Das in den Ansprüchen verwendete Wort "umfassen" schließt nicht andere Bestandteile oder Schritte aus. Der unbestimmte Artikel "ein" schließt nicht die Bedeutung eines Plurals aus. Die bloße Tatsache, dass bestimmte Maße in gegenseitig verschiedenen Ansprüchen rezitiert werden, verdeutlicht nicht, dass eine Kombination von diesen Maßen nicht zum Vorteil benutzt werde kann. Der Umfang der Erfindung ist in den folgenden Ansprüchen definiert und den dazugehörigen Äquivalenten.

## Patentansprüche

1. Formteil enthaltend Popcorn, welches im Wesentlichen von Polymer umgeben ist sowie weiteres Bindemittel, wobei der summierte Anteil an Polymer und Bindemittel ≤ 20% (Gew./Gew.) bezogen auf das Formteil beträgt, wobei das Polymer ein hydrophobes Polymer ist, wobei das Popcorn eine Korngrößenverteilung aufweist, bei der der Fettanteil des Popcorns vor der Verarbeitung ≤ 10 (Gew-) % beträgt;
wobei das Polymer ausgewählt ist aus der Gruppe bestehend aus Polypropylen, Polyethylen, Polyvinylchlorid, Polystyrol, Polyacrylat, Polymilchsäuren (PLA), Polyhydroxysäuren, Cellulosederivate oder Mischungen daraus, wobei das Bindemittel ausgewählt ist aus Harnstoff-Formaldehyd-Harz, Melamin-Formaldehyd-Harz, Melaminverstärktes-Harnstoff-Formaldehyd-Harz, Tannin-Formaldehyd-Harz, Phenol-Formaldehyd-Harz, polymeres Diphenyl-Methan-Di-Isocyanat oder Mischungen daraus.

2. Formteil gemäß Anspruch 1, wobei der summierte Anteil an Polymer und Bindemittel ≤ 15% (Gew./Gew.) bezogen auf das Formteil beträgt.

3. Formteil gemäß einem der Ansprüche 1 oder 2, wobei der Anteil von Polymer im Formteil (in Gew-% bezogen auf das Gewicht des Formteils) ≤ 5% beträgt.

4. Formteil gemäß einem der Ansprüche 1 bis 3, wobei der Anteil von Bindemittel im Formteil (in Gew-% bezogen auf das Gewicht des Formteils) ≤ 10% beträgt

5. Formteil gemäß einem der Ansprüche 1 bis 4, wobei das Verhältnis von Bindemittel zu Polymer von ≥ 1:1 bis ≤4:1 beträgt.

6. Verfahren zur Herstellung von Formteilen nach einem der Ansprüche 1 bis 5, umfassend die Schritte
a) Herstellen von Popcorn, wobei das Popcorn eine Korngrößenverteilung aufweist, bei der Fettanteil des Popcorns vor der Verarbeitung ≤ 10 (Gew-) % beträgt.
b) Hydrophobierung des in Schritt a) hergestellten Popcorns mittels eines Polymers, wobei das Polymer ein hydrophobes Polymer ist,
c) Optionale Nachbehandlung
d) Zugabe von Bindemittel
e) Herstellung des Formteils
f) Optionale Beschichtung der Formteiloberfläche
g) Optionale Kaschierung
wobei der summierte Anteil an Polymer und Bindemittel ≤ 20% (Gew./Gew.) bezogen auf das Formteil beträgt;
wobei das Polymer ausgewählt ist aus der Gruppe bestehend aus Polypropylen, Polyethylen, Polyvinylchlorid, Polystyrol, Polyacrylat, Polymilchsäuren (PLA), Polyhydroxysäuren, Cellulosederivate oder Mischungen daraus,
wobei das Bindemittel ausgewählt ist aus Harnstoff-Formaldehyd-Harz, Melamin-Formaldehyd-Harz, Melaminverstärktes-Harnstoff-Formaldehyd-Harz, Tannin-Formaldehyd-Harz, Phenol-Formaldehyd-Harz, polymeres Diphenyl-Methan-Di-Isocyanat oder Mischungen daraus.

7. Verfahren nach Anspruch 6 zur Herstellung von Formteilen gemäß einem der Ansprüche 1 bis 5.

8. Verfahren nach Anspruch 6 oder 7, wobei Schritt c) nicht optional ist und ein Erhitzen auf ≥ 60 °C bis ≤150°C umfasst.

9. Verfahren nach einem der Ansprüche 6 bis 8, wobei Schritt e) bei einem Druck von ≥1 bar und ≤ 10 bar durchgeführt wird

10. Verfahren nach einem der Ansprüche 6 bis 9, wobei Schritt e) unter Verwendung von Dampfaushärtung oder Trockendampf durchgeführt wird.

11. Verfahren nach einem der Ansprüche 6 bis 10, wobei Schritt e) unter Verwendung von Trockendampf durchgeführt wird

12. Verwendung von Formteilen gemäß einem der Ansprüche 1 bis 5 und/oder Formteilen, hergestellt gemäß eines Verfahrens gemäß einem der Ansprüche 6 bis 11 für:
- Akustische Verbund-Formteile
- Verpackungsmaterialien
- Kühlboxen,
- Schutzverpackung für Elektrogeräte,
- Gewürzdosen
- Automobilteile
- Wohnmobilteile
- Kopfstützen
- Sonnenblenden
- Kindersitzschalen
- Dämmmatten
- Dämmmaterialien (z. B. für Elektrogeräte)
- Geschirr,
- Sportartikel
- Yoga-Rollen,
- Nackenrollen
- Spielzeug
- Bilderrahmen,
- Präsentkörbe.

## Claims

1. Molded article comprising popcorn substantially surrounded by a polymer and further a binder, wherein the summed amount of polymer and binder is ≤ 20% (wt./wt.) based on the molded article, wherein the polymer is a hydrophobic polymer, wherein the popcorn has a particle size distribution in which the fat content of the popcorn before processing is ≤ 10 (wt.-)%;
wherein the polymer is selected from the group comprising polypropylene, polyethylene, polyvinyl chloride, polystyrene, polyacrylate, polylactic acids (PLA), polyhydroxy acids, cellulose derivatives, or mixtures thereof, wherein the binder is selected from urea-formaldehyde resin, melamine-formaldehyde resin, melamine-reinforced urea-formaldehyde resin, tannin-formaldehyde resin, phenol-formaldehyde resin, polymeric diphenyl methane di-isocyanate, or mixtures thereof.

2. Molded article according to claim 1, wherein the summed amount of polymer and binder is ≤ 15% (wt./wt.) based on the weight of the molded article.

3. Molded article according to claim 1 or 2, wherein the amount of polymer in the molded part (wt.-% based on the weight of the molded article) is ≤ 5%.

4. Molded article according to any one of claims 1 to 3, wherein the amount of binder in the molded article (in wt.-%, based on the weight of the molded article) is ≤ 10%.

5. Molded article according to any one of claims 1 to 4, wherein the ratio of binder to polymer is from ≥ 1:1 to ≤ 4:1.

6. Method for producing molded articles according to any one of claims 1 to 5, comprising the steps of:
a) preparing popcorn, wherein the popcorn has a particle size distribution in which the fat content of the popcorn before processing is ≤ 10 (wt.-)%;
b) hydrophobizing the popcorn produced in step a) by means of a polymer, wherein the polymer is a hydrophobic polymer;
c) optional post-treatment;
d) adding a binder;
e) producing the molded article;
f) optional coating the molded particle surface;
g) optional laminating,
wherein the summed amount of polymer and binder is ≤ 20% (wt./wt.), based on the molded article;
wherein the polymer is selected from the group comprising polypropylene, polyethylene, polyvinyl chloride, polystyrene, polyacrylate, polylactic acids (PLA), polyhydroxy acids, cellulose derivatives, or mixtures thereof, wherein the binder is selected from urea-formaldehyde resin, melamine-formaldehyde resin, melamine-reinforced urea-formaldehyde resin, tannin-formaldehyde resin, phenol-formaldehyde resin, polymeric diphenyl methane di-isocyanate, or mixtures thereof.

7. Method according to claim 6 for producing molded articles according to any one of claims 1 to 5.

8. Method according to claim 6 or 7, wherein step c) is not optional and comprises heating to ≥ 60°C to ≤ 150°C.

9. Method according to any one of claims 6 to 8, wherein step e) is carried out at a pressure of ≥ 1 bar and ≤ 10 bar.

10. Method according to any one of claims 6 to 9, wherein step e) is carried out by use of steam curing or dry steam.

11. Method according to any one of claims 6 to 10, wherein step e) is carried out by use of dry steam.

12. Use of molded articles according to any one of claims 1 to 5 and/or molded articles produced according to a method according to any one of claims 6 to 11 for:
composite acoustic molded articles,
packaging materials,
cool boxes,
protective packaging for electrical appliances,
spice boxes,
automotive parts,
mobile home parts,
headrests,
sun visors,
child seat shells,
insulation mats,
insulation materials (e.g. for electrical appliances),
tableware,
sporting goods,
yoga rolls,
neck rolls,
toys,
picture frames,
gift hampers.

## Revendications

1. Pièce moulée contenant du popcorn, lequel est essentiellement entouré par du polymère ainsi que d'un liant additionnel, dans laquelle la part de polymère et de liant s'élève à ≤ 20% (poids/poids) au total par rapport à la pièce moulée, dans laquelle le polymère est un polymère hydrophobe, dans laquelle le popcorn présente une distribution de taille de grain au niveau de laquelle la part de matières grasses du popcorn avant le traitement s'élève à ≤ 10% (poids); dans laquelle le polymère est choisi parmi le groupe comprenant le polypropylène, le polyéthylène, le poly(chlorure de vinyle), le polystyrène, le polyacrylate, les acides polylactiques (PLA), les acides polyhydroxy, les dérivés de cellulose, ou mélanges de ceux-ci, dans laquelle le polymère est choisi parmi la résine urée-formaldéhyde, la résine mélamine-formaldéhyde, la résine renforcée de mélamine-urée-formaldéhyde, la résine tannin-formaldéhyde, la résine phénol-formaldéhyde, le diisocyanate de diphénylméthane polymère, ou mélanges de ceux-ci.

2. Pièce moulée selon la revendication 1, dans laquelle la part de polymère et de liant s'élève à ≤ 15% (poids/poids) au total par rapport à la pièce moulée.

3. Pièce moulée selon la revendication 1 ou la revendication 2, dans laquelle la part de polymère dans la pièce moulée (en poids par rapport au poids de la pièce moulée) s'élève à ≤ 5%.

4. Pièce moulée selon l'une quelconque des revendications 1 à 3, dans laquelle la part de liant dans la pièce moulée (en poids par rapport au poids de la pièce moulée) s'élève à ≤ 10%.

5. Pièce moulée selon l'une quelconque des revendications 1 à 4, dans laquelle le rapport entre le liant et le polymère s'élève de ≥ 1:1- à ≤ 4 :1.

6. Procédé pour la production de pièces moulées selon l'une quelconque des revendications 1 à 5, comprenant les étapes de
a) production de popcorn, dans laquelle le popcorn présente une distribution de taille de grain au niveau de laquelle la part de matières grasses du popcorn avant le traitement s'élève à ≤ 10% (poids),
b) hydrophobisation du popcorn produit dans l'étape a) au moyen d'un polymère, dans laquelle le polymère est un polymère hydrophobe,
c) traitement ultérieur optionnel,
d) addition de liant,
e) production de la pièce moulée,
f) revêtement optionnel de la surface de la pièce moulée,
g) lamination optionnelle,
dans lequel la part de polymère et de liant s'élève à ≤ 20% (poids/poids) au total par rapport à la pièce moulée ;
dans lequel le polymère est choisi parmi le groupe comprenant le polypropylène, le polyéthylène, le poly(chlorure de vinyle), le polystyrène, le polyacrylate, les acides polylactiques (PLA), les acides polyhydroxy, les dérivés de cellulose, ou mélanges de ceux-ci, dans lequel le polymère est choisi parmi la résine urée-formaldéhyde, la résine mélamine-formaldéhyde, la résine renforcée de mélamine-urée-formaldéhyde, la résine tannin-formaldéhyde, la résine phénol-formaldéhyde, le diisocyanate de diphénylméthane polymère, ou mélanges de ceux-ci.

7. Procédé selon la revendication 6 pour la production de pièces moulées selon l'une quelconque des revendications 1 à 5.

8. Procédé selon la revendication 6 ou la revendication 7, dans lequel l'étape c) n'est pas optionnelle et comprend le chauffage à ≥ 60°C jusqu'à ≤ 150°C.

9. Procédé selon l'une quelconque des revendications 6 à 8, dans lequel l'étape e) est effectuée à une pression de ≥ 1 bar et ≤ 10 bar.

10. Procédé selon l'une quelconque des revendications 6 à 9, dans lequel l'étape e) est effectuée à l'aide d'un endurcissement à la vapeur ou à la vapeur sèche.

11. Procédé selon l'une quelconque des revendications 6 à 10, dans lequel l'étape e) est effectuée à l'aide de l'endurcissement à la vapeur sèche.

12. Utilisation de pièces moulées selon l'une quelconque des revendications 1 à 5 et/ou de pièces moulées produites selon un procédé selon l'une quelconque des revendications 6 à 11 comme :
pièces moulées composites acoustiques,
matériaux d'emballage,
glacières,
emballage de protection pour appareils électriques,
pots à épices,
parts d'automobiles,
parts de camping-cars,
appui-tête,
pare-soleil,
rehausseurs pour enfants,
matelas,
matériaux isolants (p. ex. pour appareils électriques),
vaisselle,
articles de sport,
tapis de yoga,
traversins,
jouets,
cadres,
paniers de cadeau.
